# EUROPEAN PATENT SPECIFICATION

(11) **EP 3 089 408 B1**
(45) Date of publication and mention of the grant of the patent: **24.04.2019**
(21) Application number: 14800576.2
(22) Date of filing: 09.06.2014
(51) Int. Cl.: H04L 12/703, H04L 12/437, H04J 3/16, H04J 3/08, H04Q 11/00, H04L 12/24

(54) **POTN NETWORK ODUK RING PLANNING METHOD AND DEVICE**
ODUK-RINGPLANUNGSVERFAHREN UND VORRICHTUNG FÜR POTN-NETZWERK
PROCÉDÉ ET DISPOSITIF DE PLANIFICATION D'ANNEAU ODUK DE RÉSEAU POTN

(30) Priority: 26.12.2013 CN 201310733623
(43) Date of publication of application: 02.11.2016
(73) Proprietor: ZTE Corporation, Shenzhen, Guangdong 518057 (CN)
(72) Inventor: YU, Hongbin, Shenzhen Guangdong 518057 (CN); OU, Xuegang, Shenzhen Guangdong 518057 (CN); CHEN, Jie, Shenzhen Guangdong 518057 (CN); LIU, Ling, Shenzhen Guangdong 518057 (CN); LI, Xingming, Shenzhen Guangdong 518057 (CN)
(74) Representative: Lavoix
(86) International application number: PCT/CN2014/079545
(87) International publication number: WO 2014/187404

(56) References cited:
- CN-A- 1 812 359
- CN-A- 101 686 419
- CN-A- 101 998 178
- CN-A- 102 255 739
- US-A1- 2013 142 509
- US-B1- 8 248 913
- NASIR GHANI JAMES FU DAN GUO XINYI LIU ZHENSHENG ZHANG SORRENTO NETWORKS INC PAUL BONENFANT LEAH ZHANG ANTONIO RODRIGUEZ MORAL MUR: "Architectural Framework for Automatic Protection Provisioning In Dynamic Optical Rings; draft-ghani-optical-rings-01.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. 1, 1 March 2001 (2001-03-01), XP015013592, ISSN: 0000-0004
- "ODUk Shared Ring Protection (SRP); G.873.2 (04/12)", ITU-T STANDARD, INTERNATIONAL TELECOMMUNICATION UNION, GENEVA ; CH, no. G.873.2 (04/12), 22 April 2012 (2012-04-22), pages 1-112, XP044127816, [retrieved on 2013-03-08]
- SHENGLI YUAN ET AL: "Dynamic lightpath protection in WDM mesh networks under risk-disjoint constraint", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA, vol. 3, 29 November 2004 (2004-11-29), pages 1770-1774, XP010757823, DOI: 10.1109/GLOCOM.2004.1378286 ISBN: 978-0-7803-8794-2

## Description

### TECHNICAL FIELD

The present disclosure relates to communication technologies, and in particular to an Optical Channel Data Unit k (ODUk) ring planning method and an ODUk ring planning device for a Packet Optical Transport Network (POTN).

### BACKGROUND

POTN technology, which is in essence a further deep integration of packet technology and optical transport technology subsequent to Packet Transport Network (PTN) technology, not only is featured by the packet processing capability of PTN, but also combines with the OTN technology to increase the bandwidth of a line side and transmission distance. In a metropolitan area network of an operator, the POTN first is applied to the core of a metropolitan area and a convergence layer and then gradually extends to an access layer as the demand on capacity improvement of the access layer. The network mainly supports services such as 2G/3G base station services, group leased line and big customer services of internet, internal services (business hall Data Communication Network (DCN) and Internet Protocol Television (IPTV)), Optical Line Terminal (OLT), Wireless Local Area Network (WLAN), environment monitoring and other high-quality packet services and Synchronous Transport Module (STM) time division services, Optical Channel Data Unit (ODU) services and Optical Channel (OCH) services. Therefore, once a link or node becomes invalid in the network, a great number of services will be interrupted, causing a great loss. Moreover, as the increasing expansion of service scale and bandwidth, the survivability of services becomes more and more important, this pushes us to take the survivability capability of POTN network services into consideration.

The POTN network mainly includes three protection schemes: linear 1+1 protection, linear 1:1 protection and Optical Channel Data Unit (ODU) k ring protection. For the linear protection, corresponding capacity is deducted after a path is found on a physical topology. An ODUk ring, according to the capacity size of supported services, is mainly divided into an ODU1 ring, an ODU2 ring, an ODU3 ring and an ODU4 ring.

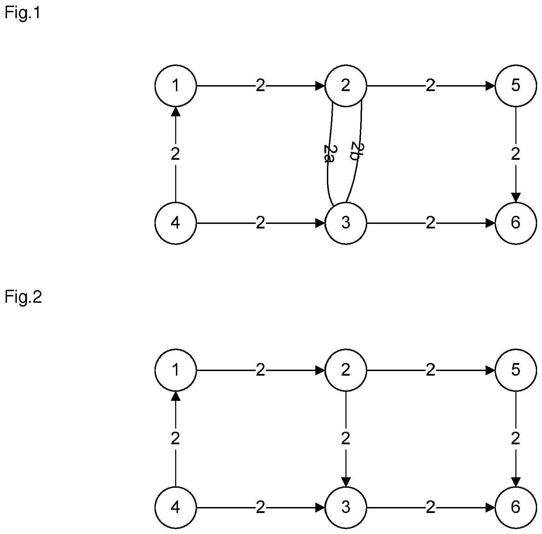

In the ODUk ring protection, there is a network including a plurality of fibres between a pair of nodes; in each fibre there is a plurality of waves with the same direction, a link represents a pair of waves opposite in directions with the same source and destination nodes and the same bandwidth. If there is at least one same wavelength link between any nodes in two ring networks, the two rings are intersected; rings intersecting at the wavelength link is called intersecting rings, as shown in Fig. 1, which is an illustration diagram of ODUk ring intersection in a POTN network; mark 2 on the link indicates the number of wavelengths. Fig. 1 shows two separated ring networks; there are two wavelength links (a and b) between node 2 and node 3, which belong to two ring networks respectively (1-2-3-4-1 and 2-5-6-3-2); Fig. 2 shows two intersected ring networks, on which there is only one wavelength link between the intersected nodes 2 and 3. Compared with the ring networks shown in Fig. 2, the separated ring networks shown in Fig. 1 lead to the existence of two ring networks between node 2 and node 3, causing an increase in the number of ring networks and an increase in the number of wavelengths in the POTN network.

Architectural framework for automatic protection provisioning in dynamic optical rings are disclosed in NASIR GHANI JAMES FU DAN GUO XINYI LIU ZHENSHENG ZHANG SORRENTO NETWORKS INC PAUL BONENFANT LEAH ZHANG ANTONIO RODRIGUEZ MORAL MUR, 5, JCT-VC MEETING; 96, MPEG MEETING; 16-3-2011-23-3-2011; GENEVA; (JOINT COLLABORATIVE TEAM ON VIDEO CODING OF ISO/IEC JTC1/SC29/WG11 AND ITU-T SG. 16); URL: HTTP:// WFTP3. ITU.INT/AV-ARCH/JCTVC-SITE/ no. 1, 1 March 2001 (2001-03-01), ISSN: 000-0004.

ODUk shared ring protection is disclosed in G.873.2 (04/12) ITU-T STANDARD, INTERNATIONAL TELECOMMUNICAITON UNION GENEVA; CH, no. G.873.2(04/12), 22 April 2012 (2012-4-22), pages 1-112,

Dynamic lightpath protection in WDM mesh networks under risk-disjoint constraint is disclosed in SHENGLI YUAN ET AL., GLOBAL TELECOMMUNICAITONS CONFERENCE, 2004, GLOBECOM '04, IEEE DALLAS, TX, USA 29 NOV. - 3 DEC., 2004, PISCATAWAY, NJ, USA, IEEE, PISCATAWAY, NJ, USA, vol. 3, 29 November 2004 (2004-11-29), pages 1770-1774, DOI: 10.1109/GLOCOM.2004.1378286, ISBN: 978-0-7803-9794-2.

US 8248913 B1 related to a system and method to support full-time protection services in a network.

### SUMMARY

The embodiments of the present disclosure provide a method and device for planning an ODUk ring in a POTN, and a computer storage medium, which can reduce the number of ring networks and the number of wavelengths.

The technical scheme of the embodiments of the present disclosure is realized as follows.

An embodiment of the present disclosure provides a method for planning an ODUk ring in a POTN, including:
acquiring a physical topology and a ring topology, wherein the physical topology comprises information about nodes, about fibres between nodes and about link between nodes, and the ring topology is formed by ODUk rings;
acquiring information about a source node and destination node of a ring network service needing ring protection and searching, according to the information about a source node and destination node of the ring network service, for a path on the ring topology, wherein the ring network service is service on a ring network on the POTN;
when finding a path on the ring topology is failed, searching, on a combined map of the physical topology and the ring topology, for two shortest paths with nodes separated; and
constructing an ODUk ring of the ring network service using the two shortest paths with nodes separated, and updating the ODUk ring into the ring topology.

Preferably, the method may further include: setting a capacity of the ODUk ring of the ring network service according to a bandwidth capacity of the service, and updating a link capacity of the ring topology and a link capacity of the physical topology according to the capacity of the ODUk ring.

Preferably, the method may further include:
acquiring a working path of the ring network service on the ODUk ring;
acquiring a wavelength link through which the working path passes and all ring networks containing the wavelength link;
updating capacities of the ring networks containing the wavelength link according to a capacity of the ring network service passing through the wavelength link; and
updating the link capacity of the physical topology and the link capacity of the physical topology according to the updated capacities of the ring networks.

Preferably, the method may further include:
when finding a path on the ring topology succeeds, acquiring, on the ring topology, a working path of the ring network service;
acquiring a wavelength link through which the working path passes and all ring networks containing the wavelength link;
updating capacities of the ring networks containing the wavelength link according to a capacity of the ring network service passing through the wavelength link; and
updating the link capacity of the physical topology and the link capacity of the physical topology according to the updated capacities of the ring networks.

Preferably, updating the capacities of the ring networks containing the wavelength link according to the capacity of the ring network service passing through the wavelength link may include:
determining all ring network services passing through the wavelength link, and acquiring a summation of capacities of ODUk containers packaged by all the ring network services; and
retrieving the ring networks containing the wavelength link, and when a capacity of a retrieved ring network is less than a capacity of an advanced ODUk container formed by the summation of the capacities of the ODUk containers, updating the capacity of the retrieved ring network to be the capacity of the advanced ODUk container.

An embodiment of the present disclosure also provides a device for planning an ODUk ring in a POTN, including: a topology acquisition module, a service information acquisition module, a path finding module, an update module and a ring network construction module, wherein
the topology acquisition module is configured to acquire a physical topology and a ring topology, wherein the physical topology comprises information about nodes, about fibres between nodes and about link between nodes, and the ring topology is formed by ODUk rings;
the service information acquisition module is configured to acquire information about a source node and destination node of a ring network service needing ring protection, wherein the ring network service is service on a ring network on the POTN;
the path finding module is configured to find, according to the information about a source node and destination node of the ring network service, a path on the ring topology;
the ring network construction module is configured to: when the path finding module fails to find a path on the ring topology, search, on a combined map of the physical topology and the ring topology, for two shortest paths with nodes separated, and construct an ODUk ring of the ring network service using the two shortest paths with nodes separated; and
the update module is configured to update the constructed ODUk ring into the ring topology.

Preferably, the device may further include: a capacity setting module, wherein
the capacity setting module is configured to set a capacity of the ODUk ring of the ring network service according to a bandwidth capacity of the service; and
the update module is further configured to update a link capacity of the ring topology and a link capacity of the physical topology according to the capacity of the ODUk ring.

Preferably, the device may further include: a ring network capacity processing module, wherein
the ring network capacity processing module is configured to:
acquire a working path of the ring network service on the ODUk ring;
acquire a wavelength link through which the working path passes and all ring networks containing the wavelength link; and
update capacities of the ring networks containing the wavelength link according to a capacity of the ring network service passing through the wavelength link;
the update module is further configured to update the link capacity of the physical topology and the link capacity of the physical topology according to the updated capacities of the ring networks.

Preferably, the device may further include: a ring network capacity processing module, wherein the ring network capacity processing module is configured to:
when the path finding module is successful to find a path on the ring topology, acquire a working path of the service from the ring topology;
acquire a wavelength link through which the working path passes and all ring networks containing the wavelength link; and
update capacities of the ring networks containing the wavelength link according to a capacity of the ring network service passing through the wavelength link;
the update module is further configured to update the link capacity of the physical topology and the link capacity of the physical topology according to the updated capacities of the ring networks.

Preferably, the ring network capacity processing module may be further configured to:
determine all ring network services passing through the wavelength link, and acquire a summation of capacities of ODUk containers packaged by all the ring network services; and
retrieve the ring networks containing the wavelength link, and when a capacity of a retrieved ring network is less than a capacity of an advanced ODUk container formed by the summation of the capacities of the ODUk containers, update the capacity of the retrieved ring network to be the capacity of the advanced ODUk container.

An embodiment of the present disclosure also provides a computer storage medium, which stores computer executable instructions configured to execute the method for planning an ODUk ring in a POTN, as described above.

The embodiments of the present disclosure have advantages as follows:
the technical scheme of the embodiments of the present disclosure can reduce the number of ring networks to be constructed and the use of wavelengths. According to the present disclosure, an ODUk ring (that is, a ring network) of a service can be constructed using two shortest paths with nodes separated in the condition that the network topology and service configuration are known; a proper ODUk ring can be constructed to protect the service passing through the ring. Compared with the related art, the present disclosure can greatly reduce the number of ring networks and the use of wavelengths and save network resources. In addition, multiple ring networks exist in a service working path section to provide protection, thereby improving the survivability of services.

### BRIEF DESCRIPTION OF THE DRAWINGS

Fig. 1 is a diagram of separated ring networks;
Fig. 2 is a diagram of intersected ring networks;
Fig. 3 is a flowchart of a method for planning an ODUk ring in a POTN provided by Embodiment 1 of the present disclosure;
Fig. 4 is a flowchart of another method for planning an ODUk ring in a POTN provided by Embodiment 1 of the present disclosure;
Fig. 5 is a flowchart of still another method for planning an ODUk ring in a POTN provided by Embodiment 1 of the present disclosure;
Fig. 6 is a structure diagram of a POTN network topology provided by Embodiment 2 of the present disclosure;
Fig. 7 is a configuration information table of ring network services provided by Embodiment 2 of the present disclosure;
Fig. 8 is a working path table of services provided by Embodiment 2 of the present disclosure;
Fig. 9 is an information table of a planned ring network provided by Embodiment 2 of the present disclosure;
Fig. 10 is a structure diagram of a first device for planning an ODUk ring in a POTN provided by Embodiment 3 of the present disclosure;
Fig. 11 is a structure diagram of a second device for planning an ODUk ring in a POTN provided by Embodiment 3 of the present disclosure;
Fig. 12 is a structure diagram of a third device for planning an ODUk ring in a POTN provided by Embodiment 3 of the present disclosure; and
Fig. 13 is a structure diagram of a fourth device for planning an ODUk ring in a POTN provided by Embodiment 3 of the present disclosure.

### DETAILED DESCRIPTION

The present disclosure is described below in further detail through specific embodiments in conjunction with accompanying drawings.

### Embodiment 1

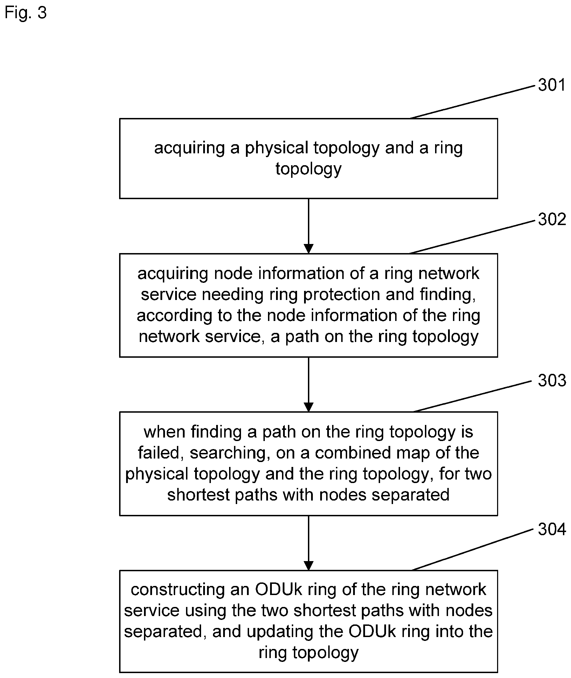

Please refer to Fig. 3, this embodiment provides a method for planning an ODUk ring in a POTN, which includes the following steps:
Step301: a physical topology and a ring topology are acquired.

The physical topology in this embodiment includes information about nodes, about fibres between nodes and about links between nodes; the fibre between nodes in the topology has a plurality of waves. In this embodiment, during planning, the POTN network topological structure is already known according to actual applications, including the number of nodes and the connectivity between nodes. In this embodiment, a network node device in the topology has a uniform control plane, so that the service can be switched to a protection path when the working path is affected.

In this embodiment, the ring topology is formed by constructed ODUK rings, including ring networks, nodes, working paths, protection paths and other information.

This embodiment can initialize the ring topology to 0, conduct planning for services and then update the ring topology after planning.

Before acquiring a physical topology and a ring topology, the method provided by this embodiment may further include establishing a physical topology and a ring topology and then conducting planning using the established physical topology and ring topology; the method provided by this embodiment also might not establish a physical topology or a ring topology, for example, the method may include reading the physical topology and ring topology already established and saved.

When a plurality of services are planned, if the current service needs construction of a new ODUk ring, then the new ODUk ring needs to be updated to the ring topology, and when a next service is planned, the acquired ring topology is the updated ring topology, by such analogy until all services are planned.

Step 302: node information of a ring network service needing ring protection is acquired and a path is searched for on the ring topology according to the node information of the ring network service.

The method provided by this embodiment is to construct a proper ODUk ring in the condition that the network topology and the service configuration are already known. During the constructing process, the node information and bandwidth information of the ring network service needing ring protection may be learned, and then a path is searched for on the ring topology according to the node information of the service, for example, if the source node of a service is 1 and the destination node is 3, then it can be searched on the ring topology whether there is a path from 1 to 3, and if there is a path from 1 to 3, it is indicated that the working path of the service already has a ring protection, at which moment there is no need to construct a ring network for the service.

In this embodiment, the POTN ring network service is directional and has symmetrical uplink and downlink services; when establishment of a working channel (that is, a working path) is carried out through routing for a service, aDijkstra shortest path algorithm with weighted directed graph may be adopted. All working channel links of ring network services are on the ring network.

Step 303: When finding a path on the ring topology is failed, a combined map of the physical topology and the ring topology is searched for two shortest paths with nodes separated.

If finding, according to the node information of the ring network service, a path on the ring topology fails, that is to say, there is no working path for the service or no ring protection for the working path on the ring topology, then it is needed to construct a ring network, that is, an ODUk ring, for the service, to perform ODUk ring protection for the service.

Step 304: an ODUk ring of the ring network service is constructed using the two shortest paths with nodes separated, and the ODUk ring is updated into the ring topology.

In this embodiment, two paths with nodes separated refer to two paths with the same source and destination nodes but different intermediate nodes. The shortest path referred in this embodiment refers to a path passing through the fewest number of nodes. Through the above path construction method, this embodiment can reduce the number of ring networks in the POTN network, and can reduce the use of wavelengths because the ODUk ring passes through relatively fewer nodes. Compared with the related art, this embodiment can reduce network resources and simplify the construction of ring networks.

In this embodiment, an ODUk ring is constructed by a technology that those skilled in the art are familiar with, for example, establishing a working path and a protection path between nodes, and forming an ODUk ring using the working path and the protection path. In this embodiment, the ring network in the network refers to an ODUk ring, including a clockwise ODUk ring and an anticlockwise ODUk ring, each of which includes a working ODUk channel (a working path) and a protection ODUk channel (a protection path), wherein the working path and the protection path use the same wave, however, the clockwise ODUk ring and the anticlockwise ODUk ring belong to two different waves respectively.

After constructing a new ODUk ring, this embodiment adds this new ring to the ring topology; when a next service is planned, the added ring topology is adopted, by such analogy until all the services are planned, and a planned ring topology is finally formed.

After constructing an ODUk ring, this embodiment further includes: setting the capacity of the ODUk ring of the service according to the bandwidth capacity of the service, and updating the link capacity of the ring topology and the link capacity of the physical topology according to the capacity of the ODUk ring. For example, if the bandwidth capacity of the service is 2.5G, since half of resources needs to be reserved to serve as the protection bandwidth in the ODUk ring, the ODUk capacity at least needs to be 5G; since the capacity of ODU1 is 2.5G, the capacity of ODU2 is 10G and the capacity of ODU3 is 40G, the constructed ODUk ring may be set as an ODU2 ring; then the link capacities of the physical topology and the ring topology are updated.

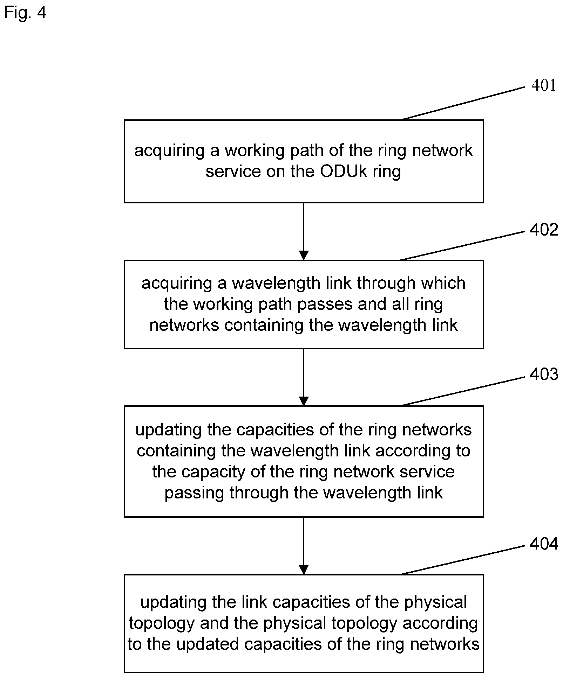

The method provided by this embodiment also may plan the capacity of a ring network; as shown in Fig. 4, after constructing a new ODUk ring and setting the capacity of this ring, the method might further include:
Step401: a working path of the ring network service is acquired on the ODUk ring.

The working path may be acquired because the working path of the ring network service is established during the process of constructing the ODUk ring.

Step 402: a wavelength link through which the working path passes and all ring networks containing the wavelength link are acquired.

For example, the working path might include nodes 1-2-3, the wavelength link through which the working path passes might be (1-2)₁, (2-3)₁, where 1 represents that the working path passes through No.1 wave in the link; then, ring networks containing wavelength link (1-2)₁ and ring networks containing wavelength link (2-3)₁ are acquired respectively.

Step 403: the capacities of the ring networks containing the wavelength link are updated according to the capacity of the ring network service passing through the wavelength link.

For example, all ring network services passing through the wavelength link are determined, the summation of the capacities of ODUk containers packaged by all the ring network services are acquired; the ring networks containing the wavelength link are retrieved; if the capacity of a retrieved ring network is less than the capacity of an advanced ODUk container formed by the summation of the capacities of the ODUk containers, the capacity of the retrieved ring network is updated to be the capacity of the advanced container;

If the capacity of the retrieved ring network is greater than or equal to the capacity of the advanced ODUk container formed by the summation of the capacities of the ODUk containers, then the ring network is not processed and a next ring network is retrieved.

This embodiment updates the capacity of the ring network containing the wavelength link so that the ring network has enough capacity to protect all services passing through the ring network. For example, the ring networks passing through wavelength link (1-2)₁ includes a 5G ring network 1 and a 10G ring network 2, the services passing through wavelength link (1-2)₁ includes service T1 and service T2, T1 having a 2.5G bandwidth, T2 having a capacity of 2.5G, and T1 and T2 are packaged in an ODU1 respectively, then the capacity of the ODUk container packaged by T1 and T2 is 2*ODU1=5G, that is, the summation of the capacities of the containers is 5G, the constructed advanced ODUk container is an ODU2 container, of which the capacity is 10G. First, it is determined whether the capacity of ring network 1 is less than 10G, obviously the capacity of ring network 1 is less than 10G, then the capacity of ring network 1 is updated to be 10G; then, it is determined whether the capacity of ring network 2 is less than 10G, obviously the capacity of ring network 2 is equal to 10G, the ring network 2 is not processed, and the capacity of the ring network 2 is kept at 10G.

Step 404: the link capacity of the physical topology and the link capacity of the physical topology are updated according to the updated capacity of the ring network.

For example, the link capacity of the ring topology and the link capacity of the physical topology are updated according to the capacity of ring network 2.

What the above describes is the construction of a new ODUk ring and planning of the capacity of the ODUk ring after path finding fails, the method provided by this embodiment also may plan the capacity of a ring network of a service in a ring topology when path finding succeeds in the ring topology; therefore, the method provided by this embodiment might further include:
if finding a path on the ring topology succeeds, a working path of the service is acquired from the ring topology;
a wavelength link through which the working path passes and all ring networks containing the wavelength link are acquired;
the capacities of the ring networks containing the wavelength link are updated according to the capacity of the ring network service passing through the wavelength link; here, the process of updating the capacities of the ring networks can refer to the above process of updating the capacity of a ring network after the ring network is constructed.

The method provided by the embodiment of the present disclosure is described below in conjunction with ODUk ring construction and capacity planning. In this embodiment, the network topology can be represented by a directional graph G (N, L), the specific topological structure is already known according to actual applications, the link between nodes is already known, and the bandwidth is already known. First, relevant parameters of this embodiment are introduced below:
N, which is a set of node devices, n=|N| represents the number of nodes.
L, which is a set of network links, d=|L| represents the number of links, there might be a plurality of links between nodes.
M, which is a set of fibres, M={*M*₁,*M*₂,....., *Mₘ*}, where m represents the number of fibres in a network; since there might be a plurality of links between nodes, m=2d.
R, which is a set of ring networks, R={*R*₁,*R*₂,....., *Rₖ*}, where k represents the number of protection rings in the middle section of a network, the set of ring networks is empty at the start, k is 0.
*RBᵢ,* which represents the capacity of ring network *Rᵢ,* the capacity of ring network refers to the capacity of ODUk; if ODUk is ODU1, the capacity is 2.5G; if ODUk is ODU2, the capacity is 10G; if ODUk is ODU3, the capacity is 40G; since half of resources are reserved to serve as protection resources in an ODUk ring, the capacity of a ring network ODUk is twice the capacity of the ODUk container needed by the working capacity of a service, which is further packaged into an advanced ODUk container; the capacity of the advanced ODUk container is the capacity of the ring network, wherein half capacity is reserved as the protection capacity.
*WPᵢ,* which is a set of wavelength links through which the working path of service *Tᵢ* passes.
T, which is a set of ring network services, T={*T*₁,*T*₂,....., *T_{c}*}, where c is any constant, here supposing all services in the T set are services needing ring protection.

The completed ODUk ring construction and capacity planning specifically includes the following steps:
Step 501: all ring network services are sorted according to the capacity size of services, a ring network topology matrix ringTop is established and is initialized to 0; then, a network physical topology is established.
Step 502: the set T of ring network services are retrieved in turn, the node information of service *Tᵢ* is acquired, and the ring topology is searched for a path according to the node information.

It should be noted that following steps are designed for each service in the service set T and here for convenient description only one service *Tᵢ* in the service set is processed as an example. When all services in the service set T are processed as follows, it is indicated that all ring network services are retrieved and the planning is ended.

Step 503: it is determined whether finding a path succeeds; if not, Step 504 is executed; otherwise, Step 505 is executed.

Since the ring topology is initialized to 0, a path cannot be found at the first time.

Step 504: a new ODUk ring is constructed and this ring is added to the ring topology, and meanwhile the link capacities of the ring topology and the physical topology are updated.

Two paths with nodes separated are searched on a map combined by the physical topology and the ring topology, and a new ODUk ring is constructed using the symmetrical paths of the found two paths with nodes separated, wherein the capacity of the ring is equal to the capacity of an advanced ODUk container constituted by the capacity of *Tᵢ*, then this ring is added to the ring topology and meanwhile the link capacity of the ring topology and the link capacity of the physical topology are updated.

Step 505: a wavelength link set *WPᵢ* through which the working path of the ring network service passes is recorded.

For each ring network service, Step 505 may be repeated, until the entire wavelength link set through which the working path of all ring network service passes is retrieved.

Step 506: a wavelength link in the set *WPᵢ* is retrieved, and all ring networks containing the wavelength link is found.

*PRᵢ* retrieves a wavelength link in the set *WPᵢ,* to obtain the summation *SumVol* of the capacities of the ODU containers respectively packaged by the capacities of all the ring network services passing through this wavelength link, and finds all ring networks *PRᵢ* containing this wavelength link.

Step 507: each ring network in the set R is retrieved and processed.

Step 506 and Step 507 are towards the processing of all wavelength links in the set. With respect to one wavelength link, step 506 is further executed to process other wavelength links in the set after a ring network containing this wavelength is obtained and the obtained ring network is retrieved, until wall wavelength links in the set are processed.

Step 508: it is determined whether the capacity *RBi* of the ring network *PRi* is less than the capacity *ODUVol* of the advanced ODUk formed by *SumVol*; if less, Step 509 is executed; otherwise, Step 507 is executed to retrieve other rings networks in the set.

Step 509: the capacity of the ring network *RBᵢ*=*ODUVol* is updated, the ring network capacity and the working capacity are recorded, and meanwhile the situation of capacity usage of the wavelength link in the ring topology is updated.

Step 508 and Step 509 are towards processing of each ring network in the set. After one ring network in the set R is processed by Step 508 and Step 509, other ring networks in the set R may be processed by Step 508 and Step 509, until all ring networks in the set R are processed.

Step 510: all ring network services are retrieved, and the planning is ended.

The method provided by this embodiment can construct a ring network according to POTN network services and plan the capacity of the ring network, which not only can provide a protection for ring network services, but also can reduce the number of ring networks to be constructed and the use of wavelengths. Multiple ring networks exist in the service working path to provide protection, thereby improving the survivability of services. The algorithm also is applicable to the dynamic adding of services, with high applicability.

### Embodiment 2

This embodiment is to introduce the planning method provided in the embodiment of the present disclosure based on a simple physical topology and ring network services.

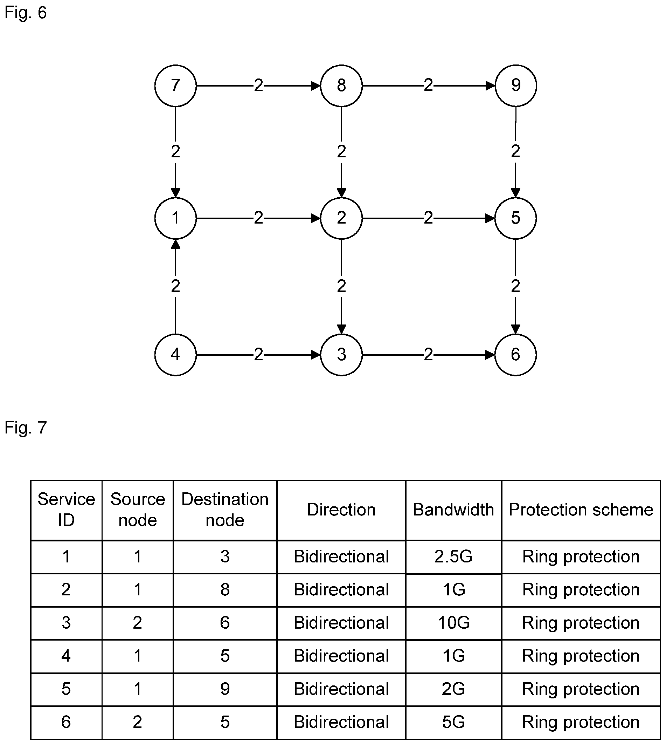

Step S10: a POTN network physical topology with an initial state as shown in Fig. 6 is established, and a ring topology initialized to 0 is established, wherein the upper limit of the bandwidth of wavelength is 40G; Fig. 7 includes the ring network services needs to be carried by the network.

Fig. 6 is a POTN network topology. Each circle represents one node in the network topology, totally 8 nodes; a link includes two fibres in opposite directions; the mark "2" on the link represents the number of fibres; supposing two waves in the same direction are in one fibre, and the upper limit of the capacity of the wave is 40G.

Fig. 7 is an information table of the services needing to be allocated. Here, the information of the services might include the source nodes, destination nodes, protection schemes, bandwidths and the like of the services.

Step S20: the set of services is retrieved set; supposing service 1 is (1-3); first, a path is searched for on the ring topology; if no path is found on the ring topology, then two paths with nodes separated are searched for on a combined map of the physical topology and the ring topology, wherein the set *WPi* of the wavelength links through which the working path passes is ((1-2)₁, (2-3)₁), where 1 represents that the working path passes through the No. 1 wave in the links (it is the wavelength link that is recorded here, rather than a fibre), the set of the wavelength links through which the downlink protection path is ((3-4)₁, (4-1)₁).

Step S30: an ODUk ring (1-2-3-4-1, the ID of the ring network is 1) is constructed using the working path and the downlink protection path, wherein the ODUk ring is an ODU2 ring, the capacity the ring network is 10G, the working path occupies 2.5G capacity (equal to the capacity of one ODU1 container); the information of the ring network is added to the ring network topology, and meanwhile the physical topology information (links 1-2,2-3,3-4,4-1 have No.2 wave only in the physical topology, because there are totally two waves in the fibre) is updated, the set *WPᵢ.* is retrieved
Step S30 may include step S310 and step S320.

Step S310: the wavelength link (1-2)₁ is obtained, wherein the ring network 1 contains this link, the capacity of the ring network 1 is not less than the capacity of an advanced ODU container packaged by the ring network service, the ring network 1 may protect the service and the ring network 1 is not processed.

Step S320: the wavelength link (2-3)₁ is obtained, wherein the ring network 1 contains this link, the capacity of the ring network 1 is not less than the capacity of an advanced ODU container packaged by the ring network service, the ring network 1 may protect the service and the ring network 1 is not processed.

Step S40: planning of service 1 is ended; a ring network 1 (1-2-3-4-1) is established, wherein the ring network is a ODU2 ring, the working capacity of the ring network is 2.5G; then, a next service is planned.

Service 2 is processed according to the above steps correspondingly.

Step S50: service 2 (1-8) is taken; first, the ring topology is searched for a path; if no path is found on the ring topology, a combined map of the physical topology and the ring topology is searched for two paths with nodes separated, wherein the set *WPi* of the wavelength links through which a working path passes is ((1-2)₁, (2-8)₁), the set of the wavelength links through which a downlink protection path passes is ((8-7)₁, (7-1)₁).

Step S60: an ODUk ring (1-2-8-7-1, the ID of the ring network is 2) is formed by the working path and the downlink protection path, wherein the ODUk ring is ODU1 ring, the capacity of the ring network is 2.5G, the working path occupies 1.25G capacity (equal to the capacity of one ODU0 container); the information of the ring network information is added to the ring topology, and meanwhile the information of the physical topology is updated and the set *WPᵢ* is retrieved.

Step S60 may include step S610 and step S620.

Step S610: the wavelength link (1-2)₁ is obtained, wherein both ring network 1 and ring network 2 contain this link, the summation *SumVol* of ODUs (service 1 is ODU1, and service 2 is ODU0) packaged by the capacity of all ring network services passing through this wavelength link is 3.75, the capacity of the ring network 1 is not less than the capacity of the advanced ODU container (ODU2) packaged by *SumVol,* the ring network 1 may protect the services and the ring network 1 is not processed; the capacity of the ring network 2 is less than the capacity of the advanced ODU container (ODU2) packaged by *SumVol,* the ring network 2 is updated as the ODU2 ring, of which the capacity is 10G.

Step S620: the wavelength link (2-8)₁ is obtained, wherein the ring network 2 contains this link, the summation *SumVol* (service 2 is ODU0) of ODUs packaged by the capacities of all ring network services passing through this wavelength link is 1.25G, the capacity of the ring network 2 is not less than the capacity of the advanced ODU container packaged by *SumVol,* the ring network 2 may protect the service and is not processed.

Step S70: planning of service 2 is ended; a ring network 2 (1-2-8-7-1) is established, wherein the ring network is ODU2 ring, the working capacity of the ring network is 3.75G; then, a next service is planned.

According to the above steps of processing service 1 and service 2, a ring network 3 (2-5-6-3-2) is established for the service 3 (2-6) with a working path ((2-5)₁,(5-6)₁), wherein the ring network is an ODU3 ring, the working capacity of the ring network is 10G. For the service 4 (1-5), the working path is ((1-2)₁,(2-5)₁), which passes through the ring networks 1, 2 and 3, wherein the ring network 1 keeps the capacity unchanged, still being an ODU2 ring, and the working capacity is 5G (the summation of capacities of one ODU1 and two ODU0), the ring network 2 keeps the capacity unchanged, still being an ODU2 ring, and the working capacity is 5G; the ring network 3 still is an ODU3 ring, and the working capacity is 11.25G. For the service 5 (1-9), the working path is ((1-7)₁,(7-8)₁,(8-9)₁), a new ring 4 (1-7-8-9-5-2-1) is established, the ring network is an ODU2 ring, the working capacity is 2.5G, information of the other rings is kept unchanged. For the service 6 (2-5), the working path is ((2-5)₂), at this time only the No. 2 wave can be selected, because the No.1 wave in the link 2-5 has not enough capacity, then a new ring 5 (2-5-6-3-2) is established, the ring network is ODU3 ring, the working capacity is 10G; since the service 6 does not pass through other rings, the information of other rings is not influenced.

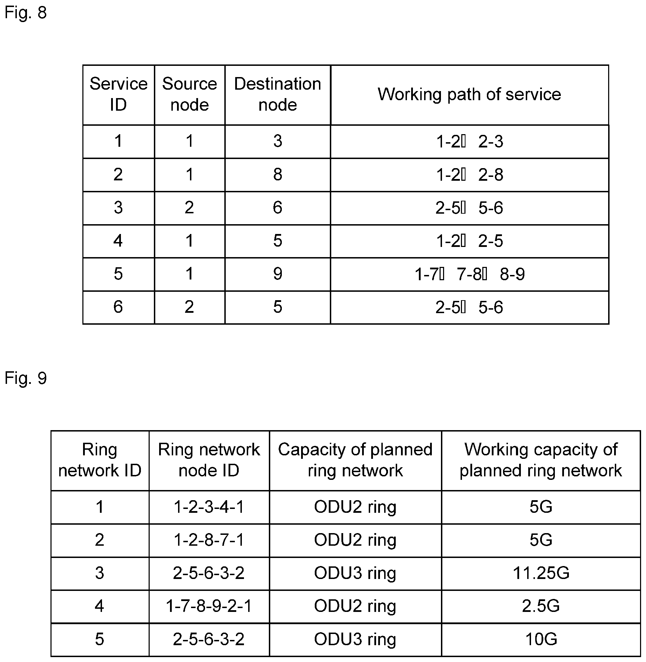

According to the above steps, a table of a planned ring network as shown in Fig. 9 is obtained finally, which includes: the ID, capacity and working capacity of a planned ring network. In addition, a table of working paths of services as shown in Fig. 8 can be obtained, including service numbers, source and destination nodes, and working paths.

### Embodiment 3

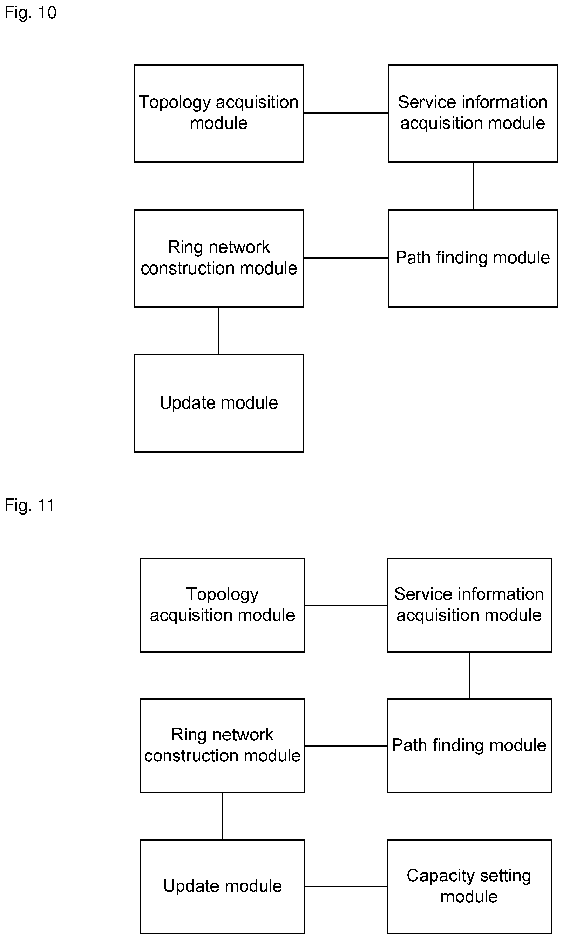

As shown in Fig. 10, this embodiment provides a device for planning an ODUk ring in a POTN, including: a topology acquisition module, a service information acquisition module, a path finding module, an update module and a ring network construction module, wherein
the topology acquisition module is configured to acquire a physical topology and a ring topology;
the service information acquisition module is configured to acquire node information of a ring network service needing ring protection;
the path finding module is configured to find, according to the node information of the ring network service, a path on the ring topology;
the ring network construction module is configured to: when the path finding module fails to find a path on the ring topology, search, on a combined map of the physical topology and the ring topology, for two shortest paths with nodes separated, and construct an ODUk ring of the ring network service using the two shortest paths with nodes separated; and
the update module is configured to update the constructed ODUk ring into the ring topology.

Preferably, as shown in Fig. 11, the device further includes: a capacity setting module, wherein
the capacity setting module is configured to set a capacity of the ODUk ring of the ring network service according to a bandwidth capacity of the service;
the update module is further configured to update a link capacity of the ring topology and a link capacity of the physical topology according to the capacity of the ODUk ring.

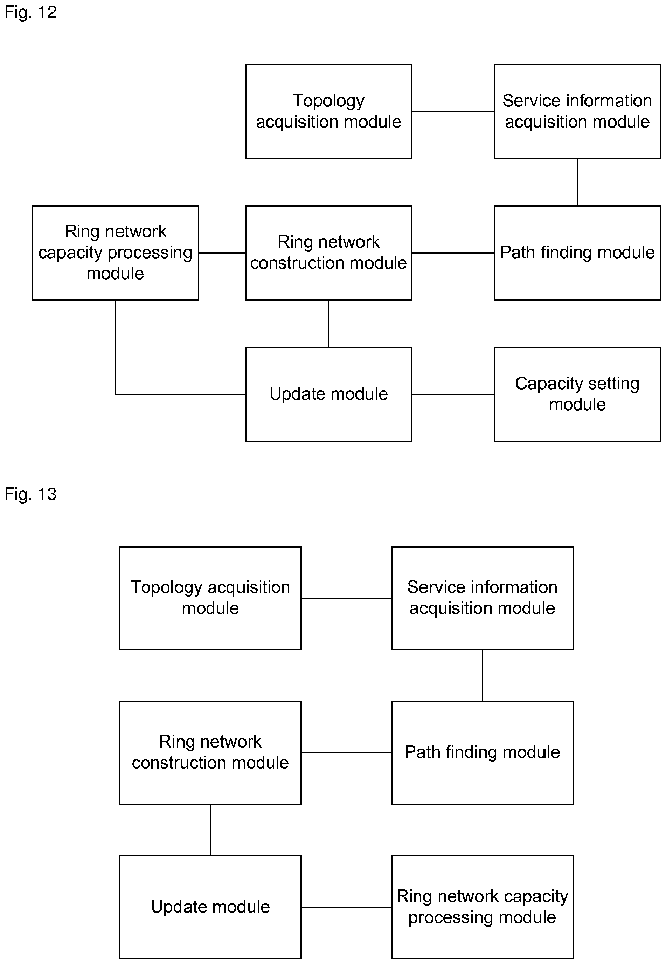

Preferably, as shown in Fig. 12, the device further includes: a ring network capacity processing module, wherein
the ring network capacity processing module is configured to:
acquire a working path of the ring network service on the ODUk ring;
acquire a wavelength link through which the working path passes and all ring networks containing the wavelength link; and
update the capacities of the ring networks containing the wavelength link according to the capacity of the ring network service passing through the wavelength link;
the update module is further configured to update the link capacity of the physical topology and the link capacity of the physical topology according to the updated capacities of the ring networks.

Preferably, as shown in Fig. 13, on the basis of the device shown in Fig. 10 the device might further include a ring network capacity processing module, wherein the ring network capacity processing module is configured to:
when the path finding module is successful to find a path on the ring topology, acquire, on the ring topology, a working path of the service;
acquire a wavelength link through which the working path passes and all ring networks containing the wavelength link; and
update capacities of the ring networks containing the wavelength link according to a capacity of the ring network service passing through the wavelength link;
the update module is further configured to update the link capacity of the physical topology and the link capacity of the physical topology according to the updated capacities of the ring networks.

Preferably, the ring network capacity processing module is further configured to: determine all ring network services passing through the wavelength link, and acquire the summation of capacities of ODUk containers packaged by all the ring network services;
retrieve the ring networks containing the wavelength link, and when a capacity of a retrieved ring network is less than a capacity of an advanced ODUk container formed by the summation of the capacities of the ODUk containers, update the capacity of the retrieved ring network to be the capacity of the advanced container.

Modules in the device for planning an ODUk ring in a POTN network can be realized by a Central Processing Unit (CPU), a Digital Signal Processor (DSP) or a Field Programmable Gate Array (FPGA) in the device for planning an ODUk ring in a POTN network.

### Embodiment 4

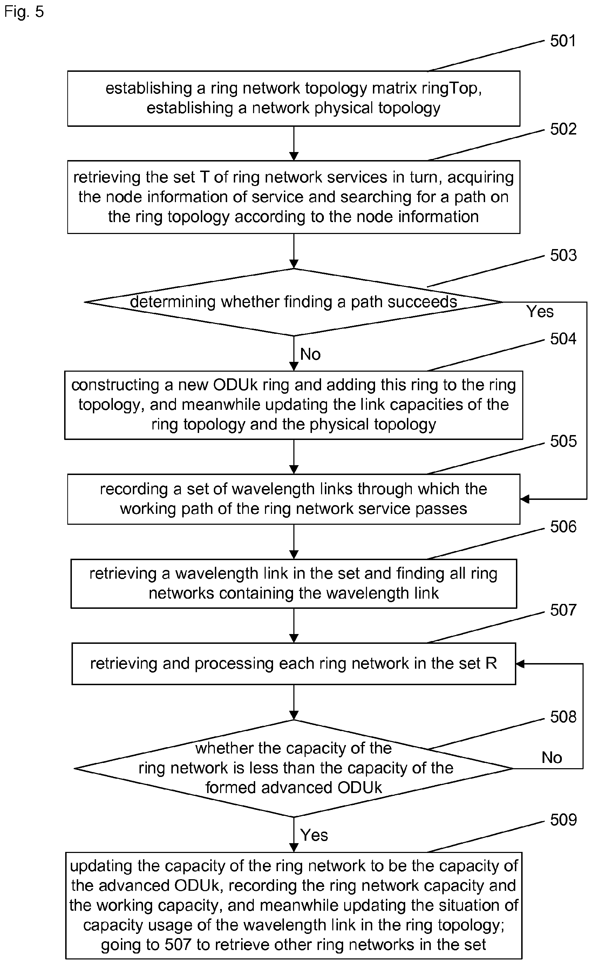

This embodiment provides a computer storage medium, which have computer executable instructions stored therein configured to execute the method for planning an ODUk ring in a POTN shown in any one of Fig. 3 to Fig. 5.

The device in this embodiment can plan an ODUk ring of a service and the capacity of the ring reasonably, reduce the number of ring networks to be constructed and the use of wavelengths to the greatest extent. In addition, multiple ring networks exist in some sections of the working path of the service to provide protection, thereby improving the survivability of the service. The algorithm is also applicable to the dynamic adding of a service and thus has high applicability.

Those skilled in the art should understand that the embodiments of the present disclosure may be presented as a method, a system or a computer program product; therefore, the present disclosure may adopt the form of hardware embodiment, software embodiment, or the combination of software and hardware embodiments. In addition, the present disclosure may adopt the form of computer program product implemented on one or more computer executable storage mediums (including but not limited to disk memory and optical memory) containing computer executable program codes.

The present disclosure is described by reference to the flowcharts and/or block diagrams of the method, device (system) and computer program product in the embodiments of the present disclosure. It should be understood that each flow and/or block in the flowcharts and/or block diagrams and the combination of flow and/or block in the flowcharts and/or block diagrams may be implemented by computer program instructions. These computer program instructions may be provided to a general computer, a dedicated computer, an embedded processor or the processor of other programmable data processing devices to produce a machine, so that instructions executed by the computer or the processor of other programmable data processing devices can generate a device which is configured to implement the functions specified in one or more flows in the flowcharts and/or in one or more blocks in the block diagrams.

These computer program instructions also can be stored in a computer readable memory which can guide a computer or other programmable data processing devices to work in a specific manner, so that the instructions stored in the computer readable memory can generate a manufactured product containing an instruction device that is configured to implement the functions specified in one or more flows in the flowcharts and/or in one or more blocks in the block diagrams.

These computer program instructions also can be loaded in a computer or other programmable data processing devices, so as to execute a series of operation steps on the computer or other programmable devices to generate processes implemented by the computer, so that the instructions executed on the computer or other programmable devices provide steps that are configured to implement the functions specified in one or more flows in the flowcharts and/or in one or more blocks in the block diagrams.

**The above are the preferred implementations of the present disclosure.**

## Claims

1. A method for planning an Optical Channel Data Unit k, ODUk, ring in a Packet Optical Transport Network, POTN, comprising:
acquiring (301) a physical topology and a ring topology, wherein the physical topology comprises information about nodes, about fibres between nodes and about link between nodes, and the ring topology is formed by ODUk rings;
acquiring (302) information about a source node and destination node of a ring network service needing ring protection, and searching, according to the information about the source node and destination node of the ring network service, for a path on the ring topology, wherein the ring network service is service on a ring network on the POTN;
when finding a path on the ring topology is failed, searching (303), on a combined map of the physical topology and the ring topology, for two shortest paths with nodes separated; and
constructing (304) an ODUk ring of the ring network service using the two shortest paths with nodes separated, and updating the ODUk ring into the ring topology.

2. The method for planning an ODUk ring in a POTN according to claim 1, further comprising: setting a capacity of the ODUk ring of the ring network service according to a bandwidth capacity of the service, and updating a link capacity of the ring topology and a link capacity of the physical topology according to the capacity of the ODUk ring.

3. The method for planning an ODUk ring in a POTN according to claim 2, further comprising:
acquiring (401) a working path of the ring network service on the ODUk ring;
acquiring (402) a wavelength link through which the working path passes and all ring networks containing the wavelength link;
updating (403) capacities of the ring networks containing the wavelength link according to a capacity of the ring network service passing through the wavelength link; and
updating (404) the link capacity of the physical topology and the link capacity of the physical topology according to the updated capacities of the ring networks.

4. The method for planning an ODUk ring in a POTN according to claim 1, further comprising:
when finding a path on the ring topology succeeds, acquiring, on the ring topology, a working path of the ring network service;
acquiring a wavelength link through which the working path passes and all ring networks containing the wavelength link;
updating capacities of the ring networks containing the wavelength link according to a capacity of the ring network service passing through the wavelength link; and
updating the link capacity of the physical topology and the link capacity of the physical topology according to the updated capacities of the ring networks.

5. The method for planning an ODUk ring in a POTN according to claim 3 or 4, wherein updating the capacities of the ring networks containing the wavelength link according to the capacity of the ring network service passing through the wavelength link comprises:
determining all ring network services passing through the wavelength link, and acquiring a summation of capacities of ODUk containers packaged by all the ring network services; and
retrieving the ring networks containing the wavelength link, and when a capacity of a retrieved ring network is less than a capacity of an advanced ODUk container formed by the summation of the capacities of the ODUk containers, updating the capacity of the retrieved ring network to be the capacity of the advanced ODUk container.

6. A device for planning an Optical Channel Data Unit k, ODUk, ring in a Packet Optical Transport Network, POTN, comprising:
a topology acquisition module, a service information acquisition module, a path finding module, an update module and a ring network construction module, wherein
the topology acquisition module is configured to acquire a physical topology and a ring topology, wherein the physical topology comprises information about nodes, about fibres between nodes and about link between nodes, and the ring topology is formed by ODUk rings;
the service information acquisition module is configured to acquire information about a source node and destination node of a ring network service needing ring protection, wherein the ring network service is service on a ring network on the POTN;
the path finding module is configured to find, according to the information about the source node and destination node of the ring network service, a path on the ring topology;
the ring network construction module is configured to: when the path finding module fails to find a path on the ring topology, search, on a combined map of the physical topology and the ring topology, for two shortest paths with nodes separated, and construct an ODUk ring of the ring network service using the two shortest paths with nodes separated; and
the update module is configured to update the constructed ODUk ring into the ring topology.

7. The device for planning an ODUk ring in a POTN according to claim 6, further comprising:
a capacity setting module, wherein
the capacity setting module is configured to set a capacity of the ODUk ring of the ring network service according to a bandwidth capacity of the service;
the update module is further configured to update a link capacity of the ring topology and a link capacity of the physical topology according to the capacity of the ODUk ring.

8. The device for planning an ODUk ring in a POTN according to claim 7, further comprising:
a ring network capacity processing module, wherein
the ring network capacity processing module is configured to:
acquire a working path of the ring network service on the ODUk ring;
acquire a wavelength link through which the working path passes and all ring networks containing the wavelength link; and
update capacities of the ring networks containing the wavelength link according to a capacity of the ring network service passing through the wavelength link;
the update module is further configured to update the link capacity of the physical topology and the link capacity of the physical topology according to the updated capacities of the ring networks.

9. The device for planning an ODUk ring in a POTN according to claim 6, further comprising: a ring network capacity processing module, wherein the ring network capacity processing module is configured to:
when the path finding module is successful to find a path on the ring topology, acquire a working path of the service from the ring topology;
acquire a wavelength link through which the working path passes and all ring networks containing the wavelength link; and
update capacities of the ring networks containing the wavelength link according to a capacity of the ring network service passing through the wavelength link;
the update module is further configured to update the link capacity of the physical topology and the link capacity of the physical topology according to the updated capacities of the ring networks.

10. The device for planning an ODUk ring in a POTN according to claim 8 or 9, wherein the ring network capacity processing module is further configured to:
determine all ring network services passing through the wavelength link, and acquire a summation of capacities of ODUk containers packaged by all the ring network services; and
retrieve the ring networks containing the wavelength link, and when a capacity of a retrieved ring network is less than a capacity of an advanced ODUk container formed by the summation of the capacities of the ODUk containers, update the capacity of the retrieved ring network to be the capacity of the advanced ODUk container.

11. A computer-readable storage medium, having stored thereon computer executable instructions which, when executed by a computer, cause the computer to carry out the method for planning an ODUk ring in a POTN according to any one of claims 1 to 5.

## Patentansprüche

1. Verfahren zum Planen eines ODUk-(Optical Channel Data Unit k)-Rings in einem optischen Pakettransportnetz (POTN - Packet Optical Transport Network), Folgendes umfassend:
Erfassen (301) einer physischen Topologie und einer Ringtopologie, wobei die physische Topologie Informationen über Knoten, über Fasern zwischen Knoten und über Links zwischen Knoten umfasst und die Ringtopologie durch ODUk-Ringe gebildet ist,
Erfassen (302) von Informationen über einen Quellknoten und Zielknoten eines Ringnetzdienstes, welcher des Ringschutzes bedarf, und Suchen nach einem Pfad auf der Ringtopologie gemäß den Informationen über den Quellknoten und Zielknoten des Ringnetzdienstes, wobei der Ringnetzdienst ein Dienst in einem Ringnetz in dem POTN ist,
wenn das Finden eines Pfades in der Ringtopologie fehlschlägt, Suchen (303) nach zwei kürzesten Wegen mit getrennten Knoten auf einem kombinierten Abbild der physischen Topologie und der Ringtopologie, und
Erstellen (304) eines ODUk-Rings des Ringnetzdienstes mit Hilfe der zwei kürzesten Pfade mit getrennten Knoten und Aktualisieren des ODUk-Rings in der Ringtopologie.

2. Verfahren zum Planen eines ODUk-Rings in einem POTN nach Anspruch 1, ferner Folgendes umfassend:
Einstellen einer Kapazität des ODUk-Rings des Ringnetzdienstes gemäß einer Bandbreitenkapazität des Dienstes und Aktualisieren einer Link-Kapazität der Ringtopologie und einer Link-Kapazität der physischen Topologie gemäß der Kapazität des ODUk-Rings.

3. Verfahren zum Planen eines ODUk-Rings in einem POTN nach Anspruch 2, ferner Folgendes umfassend:
Erfassen (401) eines Arbeitspfades des Ringnetzdienstes in dem ODUk-Ring,
Erfassen (402) eines Wellenlängen-Links, durch den der Arbeitspfad verläuft, und aller Ringnetze, die den Wellenlängen-Link enthalten,
Aktualisieren (403) der Kapazitäten der Ringnetze, die den Wellenlängen-Link enthalten, gemäß der Kapazität des Ringnetzdienstes, der durch den Wellenlängen-Link verläuft, und
Aktualisieren (404) der Link-Kapazität der physischen Topologie und der Link-Kapazität der physischen Topologie gemäß den aktualisierten Kapazitäten der Ringnetze.

4. Verfahren zum Planen eines ODUk-Rings in einem POTN nach Anspruch 1, ferner Folgendes umfassend:
wenn das Finden eines Pfades in der Ringtopologie erfolgreich ist, Erfassen eines Arbeitspfades des Ringnetzdienstes in der Ringtopologie und
Erfassen eines Wellenlängen-Links, durch den der Arbeitspfad verläuft, und aller Ringnetze, die den Wellenlängen-Link enthalten,
Aktualisieren der Kapazitäten der Ringnetze, die den Wellenlängen-Link enthalten, gemäß einer Kapazität des Ringnetzdienstes, der durch den Wellenlängen-Link verläuft, und
Aktualisieren der Link-Kapazität der physischen Topologie und der Link-Kapazität der physischen Topologie gemäß den aktualisierten Kapazitäten der Ringnetze.

5. Verfahren zum Planen eines ODUk-Rings in einem POTN nach Anspruch 3 oder 4, wobei das Aktualisieren der Kapazitäten der Ringnetze, die den Wellenlängen-Link enthalten, gemäß der Kapazität des Ringnetzdienstes, der durch den Wellenlängen-Link verläuft, Folgendes umfasst:
Bestimmen aller Ringnetzdienste, die durch den Wellenlängen-Link verlaufen, und Erfassen einer Aufsummierung von Kapazitäten von ODUk-Containern, die durch alle Ringnetzdienste gepackt werden, und
Abfragen der Ringnetze, die den Wellenlängen-Link enthalten, und wenn eine Kapazität eines abgefragten Ringnetzes geringer als eine Kapazität eines erweiterten ODUk-Containers ist, der durch das Aufsummieren der Kapazitäten der ODUk-Container gebildet wird, Aktualisieren der Kapazität des abgefragten Ringnetzes auf die Kapazität des erweiterten ODUk-Containers.

6. Vorrichtung zum Planen eines ODUk-(Optical Channel Date Unit k)-Rings in einem optischen Pakettransportnetz (POTN), Folgendes umfassend: ein Topologie-Erfassungsmodul, ein Dienstinformationen-Erfassungsmodul, ein Pfadfindungsmodul, ein Aktualisierungsmodul und ein Ringnetz-Erstellungsmodul, wobei
das Topologie-Erfassungsmodul dafür konfiguriert ist, eine physische Topologie und eine Ringtopologie zu erfassen, wobei die physische Topologie Informationen über Knoten, über Fasern zwischen Knoten und über Links zwischen Knoten umfasst und die Ringtopologie durch ODUk-Ringe gebildet ist,
das Dienstinformationen-Erfassungsmodul dafür konfiguriert ist, Informationen über einen Quellknoten und Zielknoten eines Ringnetzdienstes, welcher des Ringschutzes bedarf, zu erfassen, wobei der Ringnetzdienst ein Dienst in einem Ringnetz in dem POTN ist,
das Pfadfindungsmodul dafür konfiguriert ist, gemäß den Informationen über den Quellknoten und Zielknoten des Ringnetzdienstes einen Pfad in der Ringtopologie zu finden,
das Ringnetz-Erstellungsmodul für Folgendes konfiguriert ist: wenn das Finden eines Pfades in der Ringtopologie durch das Pfadfindungsmodul fehlschlägt, Suchen nach zwei kürzesten Wegen mit getrennten Knoten auf einem kombinierten Abbild der physischen Topologie und der Ringtopologie und Erstellen eines ODUk-Rings des Ringnetzdienstes mit Hilfe der zwei kürzesten Pfade mit getrennten Knoten, und
das Aktualisierungsmodul dafür konfiguriert ist, den ODUk-Ring in der Ringtopologie zu aktualisieren.

7. Vorrichtung zum Planen eines ODUk-Rings in einem POTN nach Anspruch 6, ferner Folgendes umfassend: ein Kapazitätseinstellungsmodul, wobei
das Kapazitätseinstellungsmodul dafür konfiguriert ist, eine Kapazität des ODUk-Rings des Ringnetzdienstes gemäß einer Bandbreitenkapazität des Dienstes einzustellen,
das Aktualisierungsmodul ferner dafür konfiguriert ist, eine Link-Kapazität der Ringtopologie und eine Link-Kapazität der physischen Topologie gemäß der Kapazität des ODUk-Rings einzustellen.

8. Vorrichtung zum Planen eines ODUk-Rings in einem POTN nach Anspruch 7, ferner Folgendes umfassend: ein Ringnetz-Kapazitätsverarbeitungsmodul, wobei:
das Ringnetz-Kapazitätsverarbeitungsmodul für Folgendes konfiguriert ist:
Erfassen eines Arbeitspfades des Ringnetzdienstes in dem ODUk-Ring,
Erfassen eines Wellenlängen-Links, durch den der Arbeitspfad verläuft, und aller Ringnetze, die den Wellenlängen-Link enthalten, und
Aktualisieren der Kapazitäten der Ringnetze, die den Wellenlängen-Link enthalten, gemäß einer Kapazität des Ringnetzdienstes, der durch den Wellenlängen-Link verläuft,
wobei das Aktualisierungsmodul ferner dafür konfiguriert ist, die Link-Kapazität der physischen Topologie und der Link-Kapazität der physischen Topologie gemäß den aktualisierten Kapazitäten der Ringnetze zu aktualisieren.

9. Vorrichtung zum Planen eines ODUk-Rings in einem POTN nach Anspruch 6, ferner Folgendes umfassend: ein Ringnetz-Kapazitätsverarbeitungsmodul, wobei das Ringnetz-Kapazitätsverarbeitungsmodul ferner für Folgendes konfiguriert ist:
wenn das Finden eines Pfades in der Ringtopologie durch das Pfadfindungsmodul erfolgreich ist, Erfassen eines Arbeitspfades des Ringnetzdienstes in der Ringtopologie,
Erfassen eines Wellenlängen-Links, durch den der Arbeitspfad verläuft, und aller Ringnetze, die den Wellenlängen-Link enthalten, und
Aktualisieren der Kapazitäten der Ringnetze, die den Wellenlängen-Link enthalten, gemäß einer Kapazität des Ringnetzdienstes, der durch den Wellenlängen-Link verläuft,
wobei das Aktualisierungsmodul ferner dafür konfiguriert ist, die Link-Kapazität der physischen Topologie und die Link-Kapazität der physischen Topologie gemäß den aktualisierten Kapazitäten der Ringnetze zu aktualisieren.

10. Vorrichtung zum Planen eines ODUk-Rings in einem POTN nach Anspruch 8 oder 9, wobei das Ringnetz-Kapazitätsverarbeitungsmodul ferner für Folgendes konfiguriert ist:
Bestimmen aller Ringnetzdienste, die durch den Wellenlängen-Link verlaufen, und Erfassen einer Aufsummierung von Kapazitäten von ODUk-Containern, die durch alle Ringnetzdienste gepackt werden, und
Abfragen der Ringnetze, die den Wellenlängen-Link enthalten, und wenn eine Kapazität eines abgefragten Ringnetzes geringer als eine Kapazität eines erweiterten ODUk-Containers ist, der durch das Aufsummieren der Kapazitäten der ODUk-Container gebildet wird, Aktualisieren der Kapazität des abgefragten Ringnetzes auf die Kapazität des erweiterten ODUk-Containers.

11. Computerlesbares Speichermedium, auf dem computerausführbare Befehle gespeichert sind, die bei Ausführung durch einen Computer den Computer veranlassen, das Verfahren zum Planen eines ODUk-Rings in einem POTN nach einem der Ansprüche 1 bis 5 durchzuführen.

## Revendications

1. Procédé de planification d'un anneau d'unité de données de canal optique « k », ODUk, dans un réseau de transport optique de paquets, POTN, comprenant les étapes ci-dessous consistant à :
acquérir (301) une topologie physique et une topologie en anneau, la topologie physique comprenant des informations concernant des noeuds, concernant des fibres entre des noeuds et concernant une liaison entre des noeuds, et la topologie en anneau étant formée par des anneaux d'unités ODUk ;
acquérir (302) des informations concernant un noeud de source et un noeud de destination d'un service de réseau en anneau nécessitant une protection en anneau, et rechercher, selon les informations concernant le noeud de source et le noeud de destination du service de réseau en anneau, un chemin sur la topologie en anneau, le service de réseau en anneau étant un service sur un réseau en anneau sur le réseau POTN ;
en cas d'échec de la recherche d'un chemin sur la topologie en anneau, rechercher (303), sur une carte combinée de la topologie physique et de la topologie en anneau, deux chemins les plus courts avec des noeuds séparés ; et
construire (304) un anneau d'unité ODUk du service de réseau en anneau en utilisant les deux chemins les plus courts avec des noeuds séparés, et mettre à jour l'anneau d'unité ODUk dans la topologie en anneau.

2. Procédé de planification d'un anneau d'unité ODUk dans un réseau POTN selon la revendication 1, comprenant en outre les étapes ci-après consistant à : définir une capacité de l'anneau d'unité ODUk du service de réseau en anneau selon une capacité de bande passante du service, et mettre à jour une capacité de liaison de la topologie en anneau et une capacité de liaison de la topologie physique selon la capacité de l'anneau d'unité ODUk.

3. Procédé de planification d'un anneau d'unité ODUk dans un réseau POTN selon la revendication 2, comprenant en outre les étapes ci-dessous consistant à :
acquérir (401) un chemin de travail du service de réseau en anneau sur l'anneau d'unité ODUk ;
acquérir (402) une liaison de longueur d'onde à travers laquelle passe le chemin de travail et tous les réseaux en anneau contenant la liaison de longueur d'onde ;
mettre à jour (403) des capacités des réseaux en anneau contenant la liaison de longueur d'onde selon une capacité du service de réseau en anneau passant par la liaison de longueur d'onde ; et
mettre à jour (404) la capacité de liaison de la topologie physique et la capacité de liaison de la topologie physique selon les capacités mises à jour des réseaux en anneau.

4. Procédé de planification d'un anneau d'unité ODUk dans un réseau POTN selon la revendication 1, comprenant en outre les étapes ci-dessous consistant à :
lorsque la recherche d'un chemin sur la topologie en anneau réussit, acquérir, sur la topologie en anneau, un chemin de travail du service de réseau en anneau ;
acquérir une liaison de longueur d'onde à travers laquelle passe le chemin de travail, et tous les réseaux en anneau contenant la liaison de longueur d'onde ;
mettre à jour des capacités des réseaux en anneau contenant la liaison de longueur d'onde selon une capacité du service de réseau en anneau passant par la liaison de longueur d'onde ; et
mettre à jour la capacité de liaison de la topologie physique et la capacité de liaison de la topologie physique selon les capacités mises à jour des réseaux en anneau.

5. Procédé de planification d'un anneau d'unité ODUk dans un réseau POTN selon la revendication 3 ou 4, dans lequel l'étape de mise à jour des capacités des réseaux en anneau contenant la liaison de longueur d'onde selon la capacité du service de réseau en anneau passant par la liaison de longueur d'onde comprend les étapes ci-dessous consistant à :
déterminer tous les services de réseau en anneau passant par la liaison de longueur d'onde, et acquérir une sommation de capacités de conteneurs d'unités ODUk empaquetés par tous les services de réseau en anneau ; et
interroger les réseaux en anneau contenant la liaison de longueur d'onde, et lorsqu'une capacité d'un réseau en anneau interrogé est inférieure à une capacité d'un conteneur d'unité ODUk avancé formé par la sommation des capacités des conteneurs d'unités ODUk, mettre à jour la capacité du réseau en anneau interrogé sur la capacité du conteneur d'unité ODUk avancé.

6. Dispositif destiné à planifier un anneau d'unité de données de canal optique k, ODUk, dans un réseau de transport optique de paquets, POTN, comprenant : un module d'acquisition de topologie, un module d'acquisition d'informations de service, un module de recherche de chemin, un module de mise à jour et un module de construction de réseau en anneau, dans lequel :
le module d'acquisition de topologie est configuré de manière à acquérir une topologie physique et une topologie en anneau, la topologie physique comprenant des informations concernant des noeuds, concernant des fibres entre des noeuds et concernant une liaison entre des noeuds, et la topologie en anneau étant formée par des anneaux d'unités ODUk ;
le module d'acquisition d'informations de service est configuré de manière à acquérir des informations concernant un noeud de source et un noeud de destination d'un service de réseau en anneau nécessitant une protection en anneau, le service de réseau en anneau étant un service sur un réseau en anneau sur le réseau POTN ;
le module de recherche de chemin est configuré de manière à rechercher, selon les informations concernant le noeud de source et le noeud de destination du service de réseau en anneau, un chemin sur la topologie en anneau ;
le module de construction de réseau en anneau est configuré de manière à : lorsque le module de recherche de chemin ne parvient pas à trouver un chemin sur la topologie en anneau, rechercher, sur une carte combinée de la topologie physique et de la topologie en anneau, deux chemins les plus courts avec des noeuds séparés, et construire un anneau d'unité ODUk du service de réseau en anneau en utilisant les deux chemins les plus courts avec des noeuds séparés ; et
le module de mise à jour est configuré de manière à mettre à jour l'anneau d'unité ODUk construit dans la topologie en anneau.

7. Dispositif destiné à planifier un anneau d'unité ODUk dans un réseau POTN selon la revendication 6, comprenant en outre : un module de définition de capacité, dans lequel :
le module de définition de capacité est configuré de manière à définir une capacité de l'anneau d'unité ODUk du service de réseau en anneau selon une capacité de bande passante du service ;
le module de mise à jour est en outre configuré de manière à mettre à jour une capacité de liaison de la topologie en anneau et une capacité de liaison de la topologie physique selon la capacité de l'anneau d'unité ODUk.

8. Dispositif destiné à planifier un anneau d'unité ODUk dans un réseau POTN selon la revendication 7, comprenant en outre : un module de traitement de capacité de réseau en anneau, dans lequel :
le module de traitement de capacité de réseau en anneau est configuré de manière à :
acquérir un chemin de travail du service de réseau en anneau sur l'anneau d'unité ODUk ;
acquérir une liaison de longueur d'onde par laquelle passe le chemin de travail, et tous les réseaux en anneau contenant la liaison de longueur d'onde ; et
mettre à jour des capacités des réseaux en anneau contenant la liaison de longueur d'onde selon une capacité du service de réseau en anneau passant par la liaison de longueur d'onde ;
le module de mise à jour est en outre configuré de manière à mettre à jour la capacité de liaison de la topologie physique et la capacité de liaison de la topologie physique selon les capacités mises à jour des réseaux en anneau.

9. Dispositif destiné à planifier un anneau d'unité ODUk dans un réseau POTN selon la revendication 6, comprenant en outre : un module de traitement de capacité de réseau en anneau, le module de traitement de capacité de réseau en anneau étant configuré de manière à :
lorsque le module de recherche de chemin réussit à trouver un chemin sur la topologie en anneau :
acquérir un chemin de travail du service à partir de la topologie en anneau ;
acquérir une liaison de longueur d'onde par laquelle passe le chemin de travail, et tous les réseaux en anneau contenant la liaison de longueur d'onde ; et
mettre à jour des capacités des réseaux en anneau contenant la liaison de longueur d'onde selon une capacité du service de réseau en anneau passant par la liaison de longueur d'onde ;
dans lequel le module de mise à jour est en outre configuré de manière à mettre à jour la capacité de liaison de la topologie physique et la capacité de liaison de la topologie physique selon les capacités mises à jour des réseaux en anneau.

10. Dispositif destiné à planifier un anneau d'unité ODUk dans un réseau POTN selon la revendication 8 ou 9, dans lequel le module de traitement de capacité de réseau en anneau est en outre configuré de manière à :
déterminer tous les services de réseau en anneau passant par la liaison de longueur d'onde, et acquérir une sommation de capacités de conteneurs d'unités ODUk empaquetés par tous les services de réseau en anneau ; et
interroger les réseaux en anneau contenant la liaison de longueur d'onde, et, lorsqu'une capacité d'un réseau en anneau interrogé est inférieure à une capacité d'un conteneur d'unité ODUk avancé formé par la sommation de capacités des conteneurs d'unités ODUk, mettre à jour la capacité du réseau en anneau interrogé sur la capacité du conteneur d'unité ODUk avancé.

11. Support de stockage lisible par ordinateur, sur lequel sont stockées des instructions exécutables par ordinateur qui, lorsqu'elles sont exécutées par un ordinateur, amènent l'ordinateur à mettre en oeuvre le procédé de planification d'un anneau d'unité ODUk dans un réseau POTN selon l'une quelconque des revendications 1 à 5.
